(19) **Europäisches Patentamt**
European Patent Office
Office européen des brevets

(11) **EP 2 512 886 B1**

(12) **EUROPÄISCHE PATENTSCHRIFT**

(45) Veröffentlichungstag und Bekanntmachung des Hinweises auf die Patenterteilung:
**03.12.2014 Patentblatt 2014/49**

(21) Anmeldenummer: **10795663.3**

(22) Anmeldetag: **15.12.2010**

(51) Int Cl.:
**B60T 8/1755** (2006.01)

(86) Internationale Anmeldenummer:
**PCT/EP2010/069765**

(87) Internationale Veröffentlichungsnummer:
**WO 2011/083004 (14.07.2011 Gazette 2011/28)**

(54) **VERFAHREN UND BREMSSYSTEM ZUR BEEINFLUSSUNG DER FAHRDYNAMIK DURCH BREMS- UND ANTRIEBSEINGRIFF**

METHOD AND BRAKING SYSTEM FOR INFLUENCING DRIVING DYNAMICS BY MEANS OF BRAKING AND DRIVING OPERATIONS

PROCÉDÉ ET SYSTÈME DE FREINAGE PERMETTANT D'INFLUER SUR LE COMPORTEMENT DYNAMIQUE EN INTERVENANT SUR LE FREINAGE ET L'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2009 DE 102009054666**

(43) Veröffentlichungstag der Anmeldung:
**24.10.2012 Patentblatt 2012/43**

(73) Patentinhaber:
• **Continental Teves AG & Co. oHG**
 **60488 Frankfurt (DE)**
• **Dr. Ing. h.c. F. Porsche AG**
 **70435 Stuttgart (DE)**

(72) Erfinder:
• **SCHAFIYHA, Schahrad**
 **65830 Kriftel (DE)**
• **LOHEIDER, Ralf**
 **65843 Sulzbach (DE)**
• **FUHR, Florian**
 **70499 Stuttgart (DE)**

(56) Entgegenhaltungen:
**DE-A1- 19 637 193     DE-A1-102006 013 788**

**Beschreibung**

Die Erfindung betrifft ein Verfahren gemäß Anspruch 1 und ein elektronisch geregeltes Bremssystem gemäß Anspruch 13.

In modernen Fahrzeugen sind verbreitet Fahrstabilitätsregelungen eingesetzt, die instabile Fahrsituationen vermeiden bzw. bei Auftreten eines instabilen Fahrzustands, in welchem das Fahrzeug den Vorgaben des Fahrers nicht folgt, das Fahrverhalten des Fahrzeugs derart beeinflussen, dass es stabilisiert und somit für den Fahrer wieder besser beherrschbar wird. So greifen Bremsschlupfregelung, Antriebsschlupfregelung und elektronische Bremskraftverteilung ein, wenn der Längsschlupf mindestens eines Reifen auf der Fahrbahn überhöhte Werte annimmt. Darüber hinaus kann das Fahrverhalten in Kurven durch eine Giermomentregelung (GMR) verbessert werden, welche weitere Größen wie beispielsweise die Gierwinkelgeschwindigkeit und die Schwimmwinkelgeschwindigkeit betrachtet.

Aus der DE 19963747 C2 ist ein Verfahren zur Steuerung eines Fahrzeuges bekannt, bei dem bei einer vorliegenden Untersteuertendenz das auf die Antriebsräder wirkende, vom Motor ausgehende Moment erhöht wird, wodurch an wenigstens einem kurvenäußeren Rad ein Vortriebsmoment erzeugt wird, und gleichzeitig an wenigstens einem kurveninneren Rad dergestalt Bremseingriffe durchgeführt werden, dass an diesem Rad die Erhöhung des auf die Antriebsräder wirkenden, vom Motor ausgehenden Moments gerade kompensiert wird. Dieses Verfahren vermeidet somit eine Beeinflussung des Radverhaltens des kurveninneren angetriebenen Rades, an dem der Bremseingriff durchgeführt wird. Anders als im erfindungsgemäßen Verfahren erfolgt nachteilhafterweise insgesamt eine Beschleunigung des Fahrzeugs.

Die DE 102006031511 A1 offenbart ein Verfahren zum Kompensieren der Bremsverzögerung bei einer Fahrzeugregelung, wonach bei Auftreten einer fahrdynamischen Grenzsituation, insbesondere bei Über- oder Untersteuern des Fahrzeugs, ein Fahrzeugregler durch automatische Betätigung wenigstens einer Radbremse in den Fahrbetrieb eingreift, um das Fahrzeug zu stabilisieren. An wenigstens einem Rad des Fahrzeugs wird daneben ein zusätzliches Antriebsmoment ausgeübt, so dass die durch den automatischen Bremseneingriff erzeugte Verzögerung des Fahrzeugs wenigstens teilweise kompensiert wird. Gemäß einer bevorzugten Ausführungsform ist die Höhe des aufgebrachten Antriebsmoments abhängig von der Abweichung zwischen Soll- und Ist-Giergeschwindigkeit des Fahrzeugs. Das Verfahren greift also erst bei Vorliegen einer instabilen Fahrsituation ein.

Aus der DE 102007051590 A1 ist ein Verfahren zum Verteilen von Antriebs- oder Schleppmomenten auf die angetriebenen Räder eines Fahrzeugs bekannt, wobei das Antriebs- oder Schleppmoment bei einer Kurvenfahrt des Fahrzeugs derart auf die angetriebenen Räder verteilt wird, dass ein Differenz-Antriebsmoment oder Schleppmoment entsteht, dass einer unter- oder übersteuernden Tendenz des Fahrzeugs entgegen wirkt. Die Höhe des Differenz-Antriebsmoments oder des Schleppmoments ist von der Höhe der an den Rädern wirkenden Radaufstandskräfte bzw. deren Änderung abhängig. Vorzugsweise wird die Radaufstandskraft für jedes Rad individuell mit Hilfe einer Sensorik gemessen.

Weiterhin sind unter dem Begriff "Torque Vectoring" Verfahren zur Verteilung von Antriebsmomenten in allradangetriebenen Fahrzeuge bekannt, die vorzugsweise Achsdifferentiale mit integrierter Kupplung ansteuern, wobei das Antriebsmoment je nach Fahrsituation gezielt auf die einzelnen Räder verteilt wird. Aufgrund des technischen Aufwands sind derartige Systeme kostenintensiv.

Ein Verfahren zur Verbesserung der Fahrdynamik eines Kraftfahrzeugs nach dem Oberbegriff des Anspruchs 1 ist aus dem Dokument DE 196 37 193 A1 sowie aus DE 10 2006 013 788 A1 bekannt.

Es ist daher die Aufgabe der vorliegenden Erfindung, ein Fahrdynamikregelsystem bereitzustellen, welches die Agilität sowie das Lenkverhalten eines Fahrzeugs verbessert und die oben genannten Nachteile vermeidet.

Diese Aufgabe wird durch das Verfahren gemäß Anspruch 1 gelöst.

Das erfindungsgemäße Verfahren, bei dem die Fahrdynamik eines Kraftfahrzeugs beeinflusst wird, wobei ein fahrerunabhängiger Bremseingriff ein Giermoment erzeugt, welches ein Einlenken und ein Umlenken des Kraftfahrzeugs unterstützt, und eine fahrerunabhängige Erhöhung des Antriebsmoments an mindestens einem Rad hervorgerufen wird, um die Bremsverzögerung des Kraftfahrzeugs zumindest teilweise zu kompensieren, basiert auf der Überlegung dass ein Bremseingriff angefordert wird, wenn das Verhältnis aus momentan genutztem Reibwert und möglichem ausnutzbarem Reibwert einen vorgegebenen Schwellwert überschreitet.

Der momentan genutzte Reibwert $\mu_{used}$ kann dabei anhand Längs- und Querbeschleunigung $a_x$ und $a_y$ abgeschätzt werden (hier bezeichnet $g$ die Erdbeschleunigung):

$$\mu_{used} = \sqrt{\left(\frac{a_x}{g}\right)^2 + \left(\frac{a_y}{g}\right)^2}$$

Der mögliche ausnutzbare Reibwert (die Haftreibungszahl) ist abhängig von Reifen und Fahrbahnoberfläche und wird vorzugsweise durch Berücksichtigung einer Lenkwinkelabweichung gegenüber dem erwarteten linearen Verhalten nach dem stationären Ackermann-Modell bestimmt. Der erwartete Lenkwinkel bei einer bestimmten Querbeschleunigung wird zweckmäßigerweise aus der Fahrzeuggeometrie unter der Annahme einer stationären Kurvenfahrt ermittelt. Eine Abweichung vom erwarteten Verhalten tritt häufig dann auf, wenn der momentan genutzte Reibwert 80%-90% des möglichen ausnutzbaren Reibwerts beträgt.

Vorhandene Querkraftreserven werden zweckmäßigerweise für eine Verbesserung des Lenkverhaltens genutzt wobei durch einen gesteuerten und/oder geregelten Bremseingriff an mindestens einem Rad ein Giermoment erzeugt wird. Das fahrerunabhängig aufgebaute Bremsmoment wirkt z.B. einem Untersteuern des Fahrzeugs in einer Kurvenfahrt entgegen.

Dies hat den Vorteil, dass hierbei ein für den Fahrer harmonisches und reproduzierbares Fahrverhalten gestaltet wird, welches Lenkvorgaben des Fahrers mit einer gegenüber Fahrzeugen nach dem Stand der Technik geringeren Zeitverzögerung folgt.

Zweckmäßigerweise wird der Bremseingriff an dem oder den vorzugsweise angetriebenen kurveninneren Rad oder Rädern angefordert.

Erfindungsgemäss wird ein Steuer-Bremseingriff angefordert, wenn die Querbeschleunigung des Fahrzeugs einen vorgegebenen ersten Schwellwert überschreitet. Bei einer trocken Fahrbahn und geeigneten Reifen liegt ein hoher ausnutzbarer Reibwert vor, die Haftreibungszahl liegt typisch bei ungefähr 1. Dann wird eine Lenkwinkelabweichung vom erwarteten linearen Verhalten bei hohen Querbeschleunigungen auftreten. Durch entsprechende Wahl des Schwellwerts können somit intensive Lenkmanöver bei hohem Reibwert unterstützt werden, ohne dass eine unerwünschte Übersteuertendenz bei Fahrbahnen mit niedriger Haftreibungszahl durch die Fahrdynamikregelung hervorgerufen würde.

Erfindungsgemäss wird ein Steuer-Bremseingriff nur dann angefordert, wenn die Lenkradwinkelgeschwindigkeit oder eine dazu proportionale Größe einen vorgegebenen Schwellwert unterschreitet. Bei engen Slalomfahrten bzw. starkem Umlenken durch den Fahrer wird eine unerwünschte Übersteuertendenz durch ein für diese Fahrsituation zu hohes Steuer-Bremsmoment vermieden.

Besonders bevorzugt wird der Bremseingriff nach Maßgabe der Abweichung der momentanen Querbeschleunigung von dem vorgegebenen ersten Schwellwert angefordert, wobei für eine unterhalb des ersten Schwellwerts liegende Querbeschleunigung kein Bremseingriff angefordert wird. Somit treten keine Komforteinbußen durch einen häufig mittels eines akustisch hörbaren Druckaufbaus über eine Hydraulikpumpe erfolgenden Bremseingriff bei Lenkradbewegungen auf, welche wegen der geringen auftretenden Querkräfte keinen fahrerunabhängigen Bremseingriff erfordern.

Ganz besonders bevorzugt wird der Betrag des angeforderten Bremsmoments proportional zum Betrag der Abweichung zwischen momentaner Querbeschleunigung und erstem Schwellwert gewählt, wobei kein ein vorgegebenes Maximalbremsmoment übersteigender Bremseingriff angefordert wird.

Zweckmäßigerweise wird ein Regel-Bremseingriff angefordert, wenn der momentane Lenkwinkel um mehr als einen vorgegebenen zweiten Schwellwert von dem erwarteten Lenkwinkel abweicht. Somit kann auch in Fahrsituation, bei denen ein Steuer-Bremseingriff nicht sinnvoll ist, einem Untersteuern des Fahrzeugs entgegengewirkt werden.

Besonders zweckmäßig ist es, wenn das Regel-Bremsmoment proportional zur Abweichung zwischen momentanem Lenkwinkel und erwartetem Lenkwinkel gewählt wird und zu einem angeforderten Steuer-Bremsmoment addiert wird. Je nach Fahrsituation kann somit ein Steuer- und/oder ein Regel-Bremseingriff erfolgen.

Bevorzugt wird der Betrag des angeforderten Bremsmoments reduziert, wenn eine Tendenz des Fahrzeugs zum Übersteuern erkannt wird. Folglich wird eine Gefährdung der Fahrstabilität vermieden.

Besonders bevorzugt wird eine Tendenz des Fahrzeugs zum Übersteuern daran erkannt, dass die zeitliche Änderung der Abweichung zwischen momentanem Lenkwinkel und erwartetem Lenkwinkel negativ ist, während ihr Betrag einen vorgegebenen Schwellwert überschreitet und/oder die Lenkradwinkelgeschwindigkeit einen vorgegebenen Schwellwert unterschreitet, während die Gierbeschleunigung einen vorgegebenen Schwellwert überschreitet.

Vorzugsweise wird der Betrag des angeforderten Bremsmoments reduziert, wenn der Antriebsschlupf mindestens eines kurvenäußeren Rades einen vorgegebenen Schwellwert überschreitet. Somit wird ein Verlust der Bodenhaftung wegen eines durch die Fahrdynamikregelung verursachten übermäßigen Schlupfs verhindert.

Es ist vorteilhaft, wenn der Betrag des angeforderten Bremsmoments reduziert wird, sobald ein Lastwechsel erkannt wird. Wenn der Fahrer schlagartig das angeforderte Antriebsmoment reduziert, wobei nach kurzer Zeit ein Schleppmoment an Stelle des vorher angeforderten Antriebsmoments auf die Räder wirkt, könnte sonst ein zusätzlicher Bremseingriff die Fahrstabilität gefährden.

Bevorzugt wird der Betrag des angeforderten Bremsmoments reduziert, wenn der Betrag der Querbeschleunigung einen vorgegebenen Anteil der während des Bremseingriffs aufgetretenen maximalen Querbeschleunigung unterschreitet. Somit wird ein dem Fahrerwunsch entsprechendes Ausfahren aus einer Kurve ermöglicht.

Zweckmäßigerweise erfolgt die Erhöhung des Antriebsmoments, welche eine auftretende Bremsverzögerung kompensiert, nur dann, wenn der Fahrer selbst ein Antriebsmoment anfordert.

Die Erfindung betrifft weiterhin ein elektronisch geregeltes Bremssystem für ein Kraftfahrzeug, welches Mittel zum fahrerunabhängige Aufbau von Bremsmoment an einem oder mehreren Fahrzeugrädern und ein Steuergerät aufweist, das ein Verfahren nach einem der vorhergehenden Ansprüche durchführt. Vorzugsweise wird eine Erhöhung des Antriebsmoments über einen Fahrzeugdatenbus bei einer Motorsteuerung angefordert.

Weitere bevorzugte Ausführungsformen ergeben sich aus den Unteransprüchen und der nachfolgenden Beschreibung eines Ausführungsbeispiels an Hand von Figuren.

Es zeigen

Fig. 1     eine schematische Darstellung eines Kraftfahrzeugs,

Fig. 2     ein Diagramm des Zusammenhangs zwischen Querbeschleunigung und Lenkwinkel bzw. Steuerbremsmoment,

Fig. 3     ein Schema zur Bestimmung des anzufordernden Bremsmoments, und

Fig. 4     eine schematische Darstellung eines Fahrzeugs, dessen Fahrdynamik nach dem erfindungsgemäßen Verfahren beeinflusst wird.

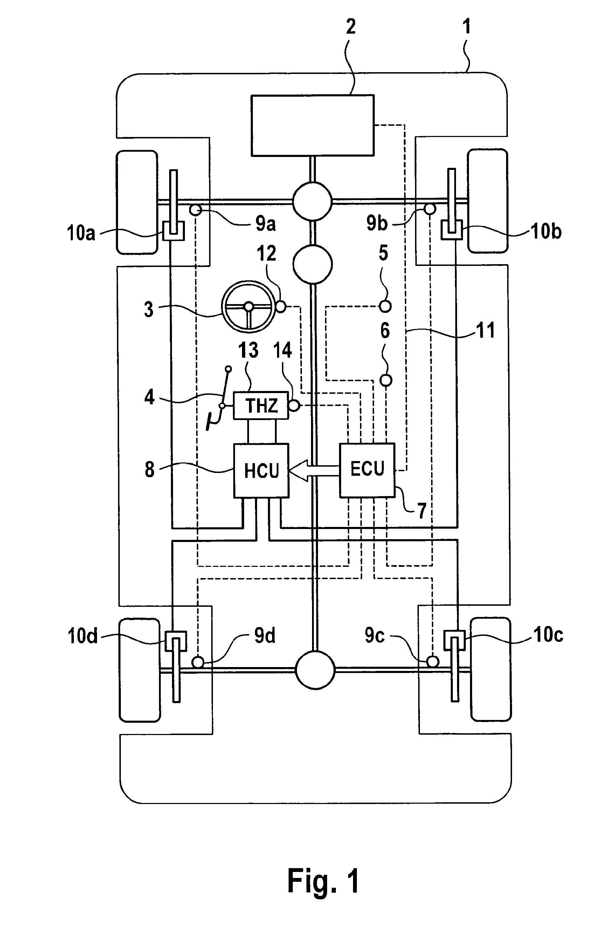

Figur 1 zeigt eine schematische Darstellung eines Kraftfahrzeugs 1, welches zur Durchführung des erfindungsgemäßen Verfahrens geeignet ist. Es weist einen Antriebsmotor 2, der zumindest einen Teil der Räder des Fahrzeugs antreibt, ein Lenkrad 3, ein Bremspedal 4, welches mit einem Tandemhauptzylinder (THZ) 13 verbunden ist, und vier individuell ansteuerbare Radbremsen 10a-10d auf. Das erfindungsgemäße Verfahren ist auch durchführbar, wenn nur ein Teil der Fahrzeugräder angetrieben wird und/oder konventionelle Differentiale eingesetzt werden. Neben hydraulischen Reibbremsen können auch an einem, mehreren oder allen Rädern elektromechanisch betätigte Reibbremsen als Radbremsen eingesetzt werden. Gemäß einer alternativen Ausführungsform der Erfindung weist das Fahrzeug einen elektrischen Antrieb auf, und das Bremsmoment an mindestens einem Rad wird zumindest teilweise von der oder den als Generator betriebenen elektrischen Maschine/n erzeugt.

Zur Erfassung von fahrdynamischen Zuständen sind ein Lenkradwinkelsensor (SWA) 12, vier Raddrehzahlsensoren 9a - 9d, ein Querbeschleunigungssensor (LA) 5, ein Gierratensensor (YR) 6 und mindest ein Drucksensor (P) 14 für den vom Bremspedal erzeugten Bremsdruck vorhanden. Dabei kann der Drucksensor 14 auch ersetzt sein durch einen Pedalweg- oder Pedalkraftsensor, falls die Hilfsdruckquelle derart angeordnet ist, dass ein vom Fahrer aufgebauter Bremsdruck von dem der Hilfsdruckquelle nicht unterscheidbar ist oder ein elektromechanischer Bremsaktuator mit bekanntem Zusammenhang zwischen Pedalstellung und Bremsmoment verwendet wird.

Die Elektronik-Steuereinheit (ECU) 7 empfängt die Daten der verschiedenen Sensoren und steuert die Hydraulikeinheit (HCU) 8. Zusätzlich werden das aktuell von Antriebsmotor 2 erzeugte Antriebsmoment und das vom Fahrer gewünschte Moment bestimmt. Dabei kann es sich auch um indirekt ermittelte Größen handeln, die beispielsweise aus einem Motorkennfeld abgeleitet werden und der Elektronik-Steuereinheit 7 über eine Schnittstelle 11 (CAN) vom nicht gezeigten Motorsteuergerät übertragen werden.

Das Fahrverhalten des Kraftfahrzeugs 1 wird wesentlich durch die Fahrwerksauslegung beeinflusst, wobei unter anderem Radlastverteilung, Elastizität der Radaufhängungen und Reifeneigenschaften das Eigenlenkverhalten bestimmen. In bestimmten Fahrsituationen, welche durch einen vorgegebenen, gewünschten Kurvenradius und dem Reibwert zwischen Reifen und Fahrbahn gekennzeichnet sind, kann es zu einem Verlust der Fahrstabilität kommen, wobei das vom Fahrer gewünschte Lenkverhalten mit der gegebenen Fahrwerksauslegung nicht erreicht werden kann. Mit den vorhandenen Sensoren kann der Fahrerwunsch erkannt und die Realisierung durch das Fahrzeug überprüft werden. Vorzugsweise wird bereits die Tendenz zu einem Verlust der Stabilität detektiert.

Betrachtet man eine stationäre Kreisfahrt im linearen Einspurmodell, so hängt der Lenkeinschlag $\delta_{stat}$ gemäß

$$\delta_{stat} = \frac{l * \dot{\psi}}{v} + EG * a_y = \frac{l}{R} + EG * a_y \quad (1)$$

mit Achsabstand *l*, dem Quotienten aus Gierrate $\Psi$ und Geschwindigkeit *v* des Fahrzeugs oder Bahnradius **R** zusammen, wobei der Eigenlenkgradient **EG** die Fahrwerksauslegung beschreibt und $a_y$ die Querbeschleunigung bezeichnet.

In diesem Modell kann der Eigenlenkgradient $EG_{stat}$ des Fahrzeugs aus der Geometrie berechnet werden:

$$EG_{stat} = \frac{m}{l} * \left[ \frac{l_R}{C_F} - \frac{l_F}{C_R} \right] = \frac{m(l_R * C_R - l_R * C_F)}{l * C_F * C_R}$$

Hierbei bezeichnet *m* die Fahrzeugmasse, *l* den Achsabstand, $l_F$ den Abstand der Vorderachse zum Schwerpunkt, $l_R$ den Abstand der Hinterachse zum Schwerpunkt, $C_F$ die Schräglaufsteifigkeit der Vorderachse und $C_R$ die Schräglaufsteifigkeit der Hinterachse.

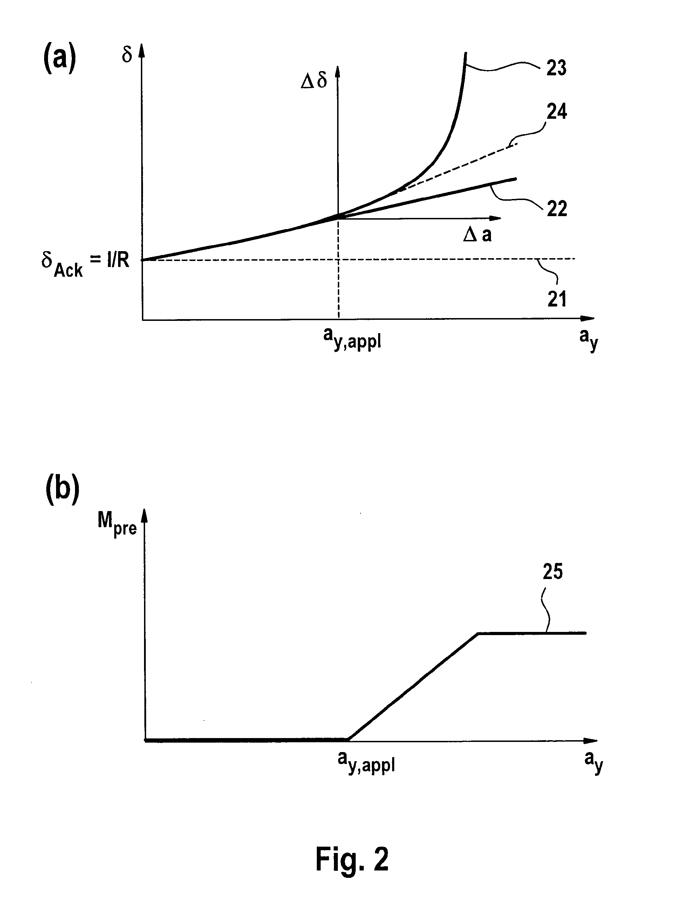

Fig. 2 (a) zeigt den Zusammenhang zwischen Lenkwinkel $\delta$ und Querbeschleunigung $a_y$ eines untersteuernd ausgelegten Fahrzeugs. Linie 21 markiert den Ackermann-Winkel *l/R*, welcher initial bei sehr geringen Querbeschleunigungen bzw. ohne Berücksichtigung der Radlastverlagerung einzustellen ist. Linie 22 gibt die gemäß Formel (1) zu erwartende Abhängigkeit des einzustellenden Lenkwinkels von der Querbeschleunigung an.

Das in Linie 23 gezeigte Verhalten eines realen Fahrzeugs weicht bei höheren Querbeschleunigungen immer stärker vom idealen Verhalten der Linie 22 ab, da auf Grund der Beschaffenheit von Fahrbahn und Reife sowie der Radaufstandskräfte die übertragbaren Querkräfte begrenzt sind, was bevorzugt durch den Fahrbahnreibwert beschrieben wird. Das erfindungsgemäße Verfahren zielt vorzugsweise auch darauf ab, bei einer gegebenen Fahrsituation den maximalen Fahrbahnreibwert zu ermitteln, mit dem die Fahrsituation an der Stabilitätsgrenze durchfahren werden kann.

Linie 24 zeigt eine Linearisierung des Zusammenhangs zwischen Lenkradwinkel und Querbeschleunigung in einem Arbeitspunkt. Bevorzugt wird als Arbeitspunkt der Punkt gewählt, an dem das Lenkverhalten beginnt, vom nach dem stationären Einspurmodell erwarteten Verhalten des Fahrzeugs abzuweichen, da dieses Verlassen des linearen Bereichs ein Erreichen der Stabilitätsgrenze anzeigt bzw. die längs- oder querdynamischen Kraftschlussreserven ausgeschöpft sind und ein Rückschluss auf den Fahrbahnreibwert möglich wird.

Während nach dem stationären Einspurmodell Lenkwinkel und Querbeschleunigung gemäß

$$\Delta\delta_{stat} = EG_{stat} * \Delta a_y$$

zusammenhängen, zeigt das Fahrzeug eine stärkere Zunahme des Lenkwinkels gemäß

$$\Delta\delta_{linear} = \left( EG_{stat} + K \right) * \Delta a_y = \Delta\delta_{stat} + \delta_{prog}$$

wobei also ein progressiver Lenkwinkel $\Delta\delta_{prog}$ auftritt (die Konstante K gibt das Maß für die Progressivität des Lenkwinkels beim jeweiligen Fahrzeug an):

$$\Delta\delta_{prog} = K * \Delta a_y$$

Erfindungsgemäß wird an einem oder mehreren Rädern ein Steuerbremsmoment aufgebracht, welches bevorzugt proportional zum progressiven Lenkwinkel $\Delta\delta_{prog}$ bzw. der Zunahme der Querbeschleunigung angefordert wird.

In Fig. 2 (b) zeigt Linie 25 die Abhängigkeit des angeforderten Steuerbremsmoments $M_{pre}$ von der Querbe-

schleunigung $a_y$. Vorzugsweise wird unterhalb eines Schwellenwerts $a_{y,appl}$ kein Bremsmoment angefordert. Besonders bevorzugt wird das Steuerbremsmoment proportional zu dem Betrag $\Delta\mathbf{a}$ gewählt, um den die momentane Querbeschleunigung den Schwellenwert überschreitet, wobei eine Begrenzung auf ein maximales Steuerbremsmoment stattfindet.

Nach dem erfindungsgemäßen Verfahren wird an einem Rad oder mehreren Rädern ein Bremsmoment aufgebracht, welches ein Gieren des Fahrzeugs um die Hochachse hervorruft, um ein aktives Einlenken des Fahrzeugs zu erreichen. Daneben findet eine Anhebung des Motormomentes gegenüber dem ursprünglichen Fahrerwunsch statt, um eine Veränderung der Fahrzeuglängsbeschleunigung zu vermeiden.

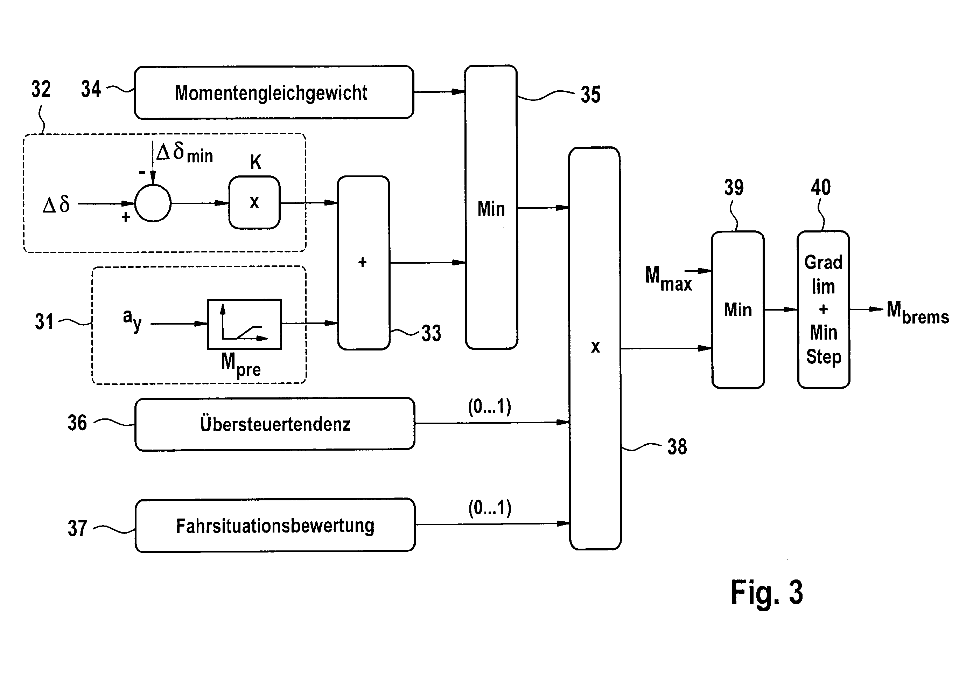

Fig. 3 zeigt ein Schema zur Bestimmung des anzufordernden Bremsmoments, wobei in diesem Ausführungsbeispiel eine komplexere Strategie zur Berechnung des Bremsmoments angewandt wird.

In Block 31 findet die oben beschriebene Bestimmung eines Steuerbremsmoments statt. Daneben wir in Block 32 ausgehend von Gleichung (1) eine Regelung der Abweichung $\Delta\delta$ zwischen dem aktuell gemessenen Lenkradwinkel $\delta_{meas}$ und dem stationären Lenkeinschlag $\delta_{stat}$ des Fahrzeugmodells durchgeführt:

$$\Delta\delta = \left|\delta_{meas}\right| - \left|\delta_{stat}\right|$$

Das Regelbremsmoment wird bevorzugt nach einem proportionalen Regleransatz bestimmt, wobei nur dann eine Anforderung stattfindet, wenn die Lenkwinkelabweichung $\Delta\delta$ einen vorgegebenen Schwellwert $\Delta\delta_{min}$ überschreitet. Je größer die Proportionalitätskonstante $\mathbf{K}$ und je kleiner der Schwellwert gewählt wird, desto stärker werden der maximale Fahrbahnreibwert und die Stabilitätsreserve ausgenutzt. Steuerbremsmoment und Regelbremsmoment werden in Block 33 addiert.

Block 34 beinhaltet eine Berechnung des maximal möglichen aufzubringenden Bremsmoments, wobei die Gewichtsverlagerung über $M_{nominal}$ sowie das vom Fahrer angeforderte Antriebsmoment $M_{Antrieb}$ berücksichtigt werden.

$$M_{no\min al} = \frac{m * r_{dyn}}{2} * \left( g * \frac{l_{F/R}}{l} \pm |a_y| * \frac{l_{CG}}{l_{TW}} \pm a_x * \frac{l_{CG}}{l_{TW}} \right)$$

In Block 35 wird daher die Bremsanforderung auf das bei Betrachtung des Momentengleichgewichts maximal sinnvolle Bremsmoment begrenzt:

$$M_{Brems} < M_{Antrieb} + M_{no\min al} * \mu_{used}$$

Da die Steuerung auf der Annahme von weitgehend stationären Fahrzuständen beruht, birgt eine dynamische Fahrzustandsänderung (wie z.B. eine Slalomfahrt) die Gefahr, dass die Bremseingriffe ein Übersteuern des Fahrzeugs verursachen. Deshalb wird das angeforderte Bremsmoment reduziert, wenn in Block 36 eine Übersteuertendenz erkannt wird. Für diese Erkennung wird z.B. die Gierbeschleunigung oder das Zunehmen der Gierrate bei gleichzeitigem Gegenlenken durch den Fahrer betrachtet. Bei Auftreten von Übersteuern wird der Bremseingriff vollständig unterbunden.

Block 37 beinhaltet eine Bewertung der Fahrsituation, wobei z.B. das Auflenken beim Ausfahren aus einer Kurve, ein durch Reduktion des Reibwerts zwischen Reifen und Fahrbahn verursachter zu hoher Schlupf eines kurvenäußeren Reifen oder das Auftreten eines Lastwechsels zu einer Verringerung bzw. einer Beendigung einer Bremsmomentanforderung führen. Dies wird in Block 38 gewährleistet, wonach die Bremsmomentanforderung mit je einem zwischen Null und Eins liegenden Faktor zur Bewertung von Übersteuertendenz bzw. Fahrsituation multipliziert wird.

Darüber hinaus findet in Block 39 eine Begrenzung des angeforderten Bremsmoments auf einen vorgegebenen Maximalwert $\mathbf{M}_{max}$ statt.

Um einen Komfortverlust durch zu häufige wechselnde Bremsmomentanforderungen zu verhindern, wird in Block 40 eine Bremsmomentanforderung nur dann umgesetzt, wenn das angeforderte Bremsmoment eine Mindestgröße aufweist und die zeitliche Änderung der Bremsanforderung einen vorgegebenen Schwellwert unterschreitet.

Das berechnete Bremsmoment $\mathbf{M}_{brems}$ wird an dem oder den kurveninneren vorzugsweise angetriebenen Rädern aufgebracht, wobei zusätzlich zu dem fahrerunabhängigen Bremsmomentaufbau bzw. dem Bremseingriff eine Anforderung von Antriebsmoment erfolgt. Diese Anhebung des Motormomentes gegenüber dem ursprünglichen Fahrerwunsch kompensiert das Bremsmoment, um eine Veränderung der Fahrzeuglängsbeschleunigung zu vermeiden.

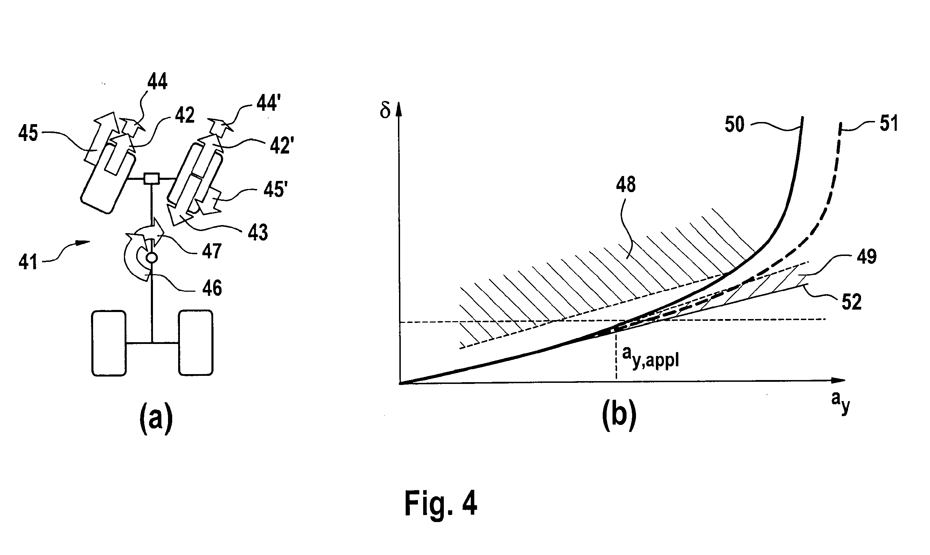

Fig. 4a zeigt ein Kraftfahrzeug 41 mit zwei angetriebenen und gelenkten Vorderrädern, dessen Fahrdynamik nach dem erfindungsgemäßen Verfahren beeinflusst wird. Auf die besagten zwei Antriebsräder wirkt ein dem Fahrerwunsch entsprechendes Antriebsmoment 42, 42'. Daneben wird fahrerunabhängig ein Bremsmoment 43 an dem kurveninneren Antriebsrad aufgebaut und ein zusätzliches Antriebsmoment 44, 44' angefordert, welches die Bremsverzögerung der Fahrdynamikregelung kompensiert:

$$M_{antrieb} = 2 * (M_{brems} / 2)$$

Um eine unerwünschte Beschleunigung des Fahrzeugs zu vermeiden, wird das zusätzliche Antriebsmoment vorzugsweise durch das Minimum aus angefordertem Bremsmoment und tatsächlich aufgebautem Bremsmoment begrenzt. Zweckmäßigerweise findet eine fahrerunabhängige Erhöhung des Antriebsmoments nur dann statt, wenn der Fahrer selbst ein Antriebsmoment anfordert und keine Fahrstabilitäts- oder Schlupfregelung eine Begrenzung des Antriebsmoments erfordert.

Aus der (Vektor-)Summe von an den Antriebsrädern anliegenden Antriebs- und Bremsmomenten ergeben sich die resultierenden Momente 45, 45'. Das durch den Fahrerlenkeinschlag verursachten Giermoment 46 wird durch ein zusätzliches Giermoment 47 ergänzt, wodurch die Lenkvorgabe des Fahrers besser umgesetzt wird.

In Fig. 4b zeigt Linie 51 den Zusammenhang zwischen Lenkwinkel $\delta$ und Querbeschleunigung $a_y$ eines untersteuernd ausgelegten Fahrzeugs, welches nach dem erfindungsgemäßen Verfahren beeinflusst wird. Gegenüber dem unbeeinflussten Fahrzeug, welches dem als Linie 50 dargestellten Zusammenhang folgt, hat sich das Lenkverhalten des Fahrzeugs deutlich der gewünschten als Linie 52 eingezeichneten idealen Verhalten angenähert. Nach dem erfindungsgemäßen Verfahren wird in Bereich 49 ein Steuerbremsmoment aufgebaut, um ein neutraleres Fahrverhalten zu erreichen. Daneben findet in Bereich 48 eine Regelung der Lenkwinkelabweichung statt, die das statische Querverhalten eines Fahrzeuges durch eine optimale Ausnutzung der Stabilitätsreserven verbessert. Speziell bei intensiven Lenkmanövern, wobei hohe Querkräfte auftreten, wird die Lenkvorgabe des Fahrers durch die vorstehend beschriebene Fahrdynamikregelung ohne nachteilige Effekte besser umgesetzt.

## Patentansprüche

1. Verfahren, bei dem die Fahrdynamik eines Kraftfahrzeugs beeinflusst wird, wobei ein fahrerunabhängiger Bremseingriff ein Giermoment erzeugt, welches ein Einlenken und ein Umlenken des Kraftfahrzeugs unterstützt, wenn das Verhältnis aus momentan genutztem Reibwert und möglichem ausnutzbarem Reibwert einen vorgegebenen Schwellwert überschreitet, und eine fahrerunabhängige Erhöhung des Antriebsmoments an mindestens einem Rad hervorgerufen wird, um die Bremsverzögerung des Kraftfahrzeugs zumindest teilweise zu kompensieren, **dadurch gekennzeichnet, dass** ein Steuer-Bremseingriff angefordert wird, wenn die Querbeschleunigung des Fahrzeugs einen vorgegebenen ersten Schwellwert überschreitet und die Lenkradwinkelgeschwindigkeit oder eine dazu proportionale Größe einen vorgegebenen Schwellwert unterschreitet.

2. Verfahren nach Anspruch 1, **dadurch gekennzeichnet, dass** der Bremseingriff an dem oder den vorzugsweise angetriebenen kurveninneren Rad oder Rädern angefordert wird.

3. Verfahren nach Anspruch 1 oder 2, **dadurch gekennzeichnet, dass** der Bremseingriff nach Maßgabe der Abweichung der momentanen Querbeschleunigung von dem vorgegebenen ersten Schwellwert angefordert wird, wobei für eine unterhalb des ersten Schwellwerts liegende Querbeschleunigung kein Bremseingriff angefordert wird.

4. Verfahren nach Anspruch 3, **dadurch gekennzeichnet, dass** der Betrag des angeforderten Bremsmoments proportional zum Betrag der Abweichung zwischen momentaner Querbeschleunigung und erstem Schwellwert ist, wobei kein ein vorgegebenes Maximalbremsmoment übersteigender Bremseingriff angefordert wird.

5. Verfahren nach mindestens einem der vorhergehenden Ansprüche, **dadurch gekennzeichnet, dass** ein Regel-Bremseingriff angefordert wird, wenn der momentane Lenkwinkel um mehr als einen vorgegebenen Schwellwert von dem erwarteten Lenkwinkel abweicht, welcher aus dem linearen Einspurmodell für eine stationäre Kreisfahrt ermittelt wird.

**6.** Verfahren nach Anspruch 5, **dadurch gekennzeichnet, dass** das Regel-Bremsmoment proportional zur Abweichung zwischen momentanem Lenkwinkel und erwartetem Lenkwinkel gewählt wird und zu dem angeforderten Steuer-Bremsmoment addiert wird.

**7.** Verfahren nach mindestens einem der vorhergehenden Ansprüche, **dadurch gekennzeichnet, dass** der Betrag des angeforderten Bremsmoments reduziert wird, wenn eine Tendenz des Fahrzeugs zum Übersteuern erkannt wird.

**8.** Verfahren nach Anspruch 7, **dadurch gekennzeichnet, dass** eine Tendenz des Fahrzeugs zum Übersteuern daran erkannt wird, dass die zeitliche Änderung der Abweichung zwischen momentanem Lenkwinkel und erwartetem Lenkwinkel negativ ist, während ihr Betrag einen vorgegebenen Schwellwert überschreitet und/oder die Lenkradwinkelgeschwindigkeit einen vorgegebenen Schwellwert unterschreitet, während die Gierbeschleunigung einen vorgegebenen Schwellwert überschreitet.

**9.** Verfahren nach mindestens einem der vorhergehenden Ansprüche, **dadurch gekennzeichnet, dass** der Betrag des angeforderten Bremsmoments reduziert wird, wenn der Antriebsschlupf mindestens eines kurvenäußeren Rades einen vorgegebenen Schwellwert überschreitet.

**10.** Verfahren nach mindestens einem der vorhergehenden Ansprüche, **dadurch gekennzeichnet, dass** der Betrag des angeforderten Bremsmoments reduziert wird, wenn ein Lastwechsel erkannt wird.

**11.** Verfahren nach mindestens einem der vorhergehenden Ansprüche, **dadurch gekennzeichnet, dass** der Betrag des angeforderten Bremsmoments reduziert wird, wenn der Betrag der Querbeschleunigung einen vorgegebenen Anteil der während des Bremseingriffs aufgetretenen maximalen Querbeschleunigung unterschreitet.

**12.** Verfahren nach mindestens einem der vorhergehenden Ansprüche, **dadurch gekennzeichnet, dass** die Erhöhung des Antriebsmoments, welche eine auftretende Bremsverzögerung kompensiert, nur dann erfolgt, wenn der Fahrer selbst ein Antriebsmoment anfordert.

**13.** Elektronisch geregeltes Bremssystem für ein Kraftfahrzeug, welches Mittel zum fahrerunabhängigen Aufbau von Bremsmoment an einem oder mehreren Fahrzeugrädern und ein Steuergerät aufweist, das ein Verfahren nach einem der vorhergehenden Ansprüche durchführt, wobei vorzugsweise eine Erhöhung des Antriebsmoments über einen Fahrzeugdatenbus bei einer Motorsteuerung angefordert wird.

**Claims**

**1.** Method, in which the driving dynamics of a motor vehicle are influenced, a driver-independent braking action generating a yawing moment which assists the steering in and steering round of the motor vehicle when the ratio of the instantaneously used coefficient of friction and of the possible utilizable coefficient of friction overshoots a stipulated threshold value, and a driver-independent increase in the drive torque being caused on at least one wheel, in order at least partially to compensate the braking deceleration of the motor vehicle, **characterized in that** a braking control action is required when the transverse acceleration of the vehicle overshoots a stipulated first threshold value and the steering wheel angle speed or a variable proportional to this undershoots a stipulated threshold value.

**2.** Method according to Claim 1, **characterized in that** the braking action is required on the preferably driven bend-inside wheel or wheels.

**3.** Method according to Claim 1 or 2, **characterized in that** the braking action is required in accordance with the deviation of the instantaneous transverse acceleration from the stipulated first threshold value, no braking action being required for a transverse acceleration lying below the first threshold value.

**4.** Method according to Claim 3, **characterized in that** the amount of the required braking torque is proportional to the amount of deviation between the instantaneous transverse acceleration and the first threshold value, no braking action which overshoots a stipulated maximum braking torque being required.

**5.** Method according to at least one of the preceding claims, **characterized in that** a braking regulation action is required when the instantaneous steering angle deviates from the expected steering angle by more than a stipulated threshold value, which is ascertained from the linear single-track model for steady-state circular driving.

6. Method according to Claim 5, **characterized in that** the braking regulation torque is selected proportionally to the deviation between the instantaneous steering angle and expected steering angle and is added to a required braking control torque.

7. Method according to at least one of the preceding claims, **characterized in that** the amount of the required braking torque is reduced when a tendency of the vehicle to oversteering is detected.

8. Method according to Claim 7, **characterized in that** a tendency of the vehicle to oversteering is detected from the fact that the time change in the deviation between the instantaneous steering angle and expected steering angle is negative, while its amount overshoots a stipulated threshold value and/or the steering wheel angle speed undershoots a stipulated threshold value, whereas the yaw acceleration overshoots a stipulated threshold value.

9. Method according to at least one of the preceding claims, **characterized in that** the amount of the required braking torque is reduced when the traction slip of at least one bend-outside wheel overshoots a stipulated threshold value.

10. Method according to at least one of the preceding claims, **characterized in that** the amount of the required braking torque is reduced when a load change is detected.

11. Method according to at least one of the preceding claims, **characterized in that** the amount of the required braking torque is reduced when the amount of transverse acceleration undershoots a stipulated fraction of the maximum transverse acceleration which has occurred during the braking action.

12. Method according to at least one of the preceding claims **characterized in that** the increase in the drive torque, which increase compensates a braking deceleration occurring, takes place only when the driver himself requires a drive torque.

13. Electronically controlled brake system for a motor vehicle, which brake system has means for the driver-independent build-up of braking torque on one or more vehicle wheels, and a control apparatus which carries out a method according to one of the preceding claims, preferably an increase in the drive torque being required via a vehicle data bus in an engine control.

**Revendications**

1. Procédé dans lequel la dynamique de conduite d'un véhicule automobile est influencée, une intervention de freinage indépendante du conducteur produisant un couple de lacet qui favorise un braquage et une déviation du véhicule automobile lorsque le rapport du coefficient de friction utilisé actuellement sur le coefficient de friction utilisable possible dépasse une valeur seuil prédéfinie et une augmentation du couple d'entraînement indépendante du conducteur étant provoquée au niveau d'au moins une roue, afin de compenser au moins en partie une décélération de freinage du véhicule automobile, **caractérisé en ce qu'**une intervention de freinage de commande est demandée lorsque l'accélération transversale du véhicule dépasse une première valeur seuil prédéfinie et que la vitesse angulaire du volant ou une grandeur proportionnelle à celle-ci est inférieure à une valeur seuil prédéfinie.

2. Procédé selon la revendication 1, **caractérisé en ce que** l'intervention de freinage est demandée au niveau de la roue ou des roues internes au virage, de préférence motrices.

3. Procédé selon la revendication 1 ou 2, **caractérisé en ce que** l'intervention de freinage est demandée en fonction de l'écart de l'accélération transversale actuelle par rapport à la première valeur seuil prédéfinie, aucune intervention de freinage n'étant demandée dans le cas d'une accélération transversale en dessous de la première valeur seuil.

4. Procédé selon la revendication 3, **caractérisé en ce que** la valeur du couple de freinage demandé est proportionnelle à la valeur de l'écart entre l'accélération transversale actuelle et la première valeur seuil, aucune intervention de freinage dépassant un couple de freinage maximal prédéfini n'étant demandée.

5. Procédé selon au moins l'une quelconque des revendications précédentes, **caractérisé en ce qu'**une intervention de freinage de réglage est demandée lorsque l'angle de direction actuel s'écarte de plus d'une valeur seuil prédéfinie de l'angle de direction attendu qui est déterminé à partir du modèle d'engagement linéaire pour une conduite en virage stationnaire.

**6.** Procédé selon la revendication 5, **caractérisé en ce que** le couple de freinage de réglage est sélectionné de manière proportionnelle à l'écart entre l'angle de direction actuel et l'angle de direction attendu et est ajouté au couple de freinage de commande demandé.

**7.** Procédé selon au moins l'une quelconque des revendications précédentes, **caractérisé en ce que** la valeur du couple de freinage demandé est réduite lorsque l'on détecte une tendance du véhicule à survirer.

**8.** Procédé selon la revendication 7, **caractérisé en ce qu'**une tendance du véhicule à survirer est détectée par le fait que la variation dans le temps de l'écart entre l'angle de direction actuel et l'angle de direction attendu est négative tandis que sa valeur dépasse une valeur seuil prédéfinie et/ou que la vitesse angulaire du volant est en dessous d'une valeur seuil prédéfinie tandis que l'accélération en lacet dépasse une valeur seuil prédéfinie.

**9.** Procédé selon au moins l'une quelconque des revendications précédentes, **caractérisé en ce que** la valeur du couple de freinage demandé est réduite lorsque le glissement d'entraînement d'au moins une roue externe au virage dépasse une valeur seuil prédéfinie.

**10.** Procédé selon au moins l'une quelconque des revendications précédentes, **caractérisé en ce que** la valeur du couple demandé est réduite lorsque l'on détecte un changement de charge.

**11.** Procédé selon au moins l'une quelconque des revendications précédentes, **caractérisé en ce que** la valeur du couple de freinage demandé est réduite lorsque la valeur de l'accélération transversale est en dessous d'une proportion prédéfinie d'accélération transversale maximale s'étant produite lors de l'intervention de freinage.

**12.** Procédé selon au moins l'une quelconque des revendications précédentes, **caractérisé en ce que** l'augmentation du couple d'entraînement qui compense une décélération de freinage se produisant n'a lieu que lorsque le conducteur demande lui-même un couple d'entraînement.

**13.** Système de freinage à régulation électronique pour un véhicule automobile, qui présente des moyens d'augmentation du couple de freinage indépendamment du conducteur au niveau d'une ou plusieurs des roues du véhicule et un appareil de commande qui met en oeuvre un procédé selon l'une quelconque des revendications précédentes, une augmentation du couple d'entraînement étant de préférence demandée par le biais d'un bus de données du véhicule au niveau d'une commande du moteur.

Fig. 1

**(a)**

**(b)**

Fig. 2

Fig. 3

EP 2 512 886 B1

(a)

(b)

Fig. 4

EP 2 512 886 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19963747 C2
- DE 102006031511 A1
- DE 102007051590 A1
- DE 19637193 A1
- DE 102006013788 A1